# FASCICULE DE BREVET EUROPEEN

(11) **EP 0 593 407 B1**
(45) Date de publication et mention de la délivrance du brevet: **27.05.1998**
(21) Numéro de dépôt: 93870204.0
(22) Date de dépôt: 18.10.1993
(51) Int. Cl.: A47B 47/04, F16B 12/26

(54) **Système d'assemblage modulaire d'éléments intercalaires d'accrochage et de plateaux pour réaliser des présentoirs, des étagères d'étalage et/ou des meubles**
Modulares Bausatzsystem mit zwischenschiebbaren Aufhängeelementen und Böden zum Realisieren von Presentiereinheiten, Ausstellungsregalen und/oder Möbeln
Modular assembly system with hooking insert elements and trays to make display units, shelf displays and/or furniture

(30) Priorité: 16.10.1992 BE 9200902
(43) Date de publication de la demande: 20.04.1994
(73) Titulaire: Schatt, Jean Marie, 1020 Bruxelles (BE)
(72) Inventeur: Schatt, Jean Marie, 1020 Bruxelles (BE)
(74) Mandataire: Vanderperre, Robert

(56) Documents cités:
- DE-U- 8 712 587
- FR-A- 668 739
- FR-A- 2 194 248
- GB-A- 2 195 001

## Description

La présente invention est relative à un système d'assemblage modulaire à angle droit d'éléments plans intercalaires pourvus de doigts découpés dans lesdits éléments intercalaires perpendiculairement aux arêtes desdits éléments et de plateaux percés de trous, par emboîtement des doigts dans lesdits trous des plateaux percés vis-à-vis des doigts, les doigts portant à leur extrémité des ergots coplanaires latéraux de même épaisseur, tournés l'un vers l'autre et/ou dos à dos. Elle permet de réaliser des présentoirs, des étagères d' étalage et/ou des meubles qui peuvent facilement être montés, démontés, modifiés et remontés à volonté, selon les nécessités du moment.

Le système est destiné avant tout aux étalagistes, décorateurs et à l'industrie de l'ameublement où il pourra être vendu sous forme de kit prêt à être monté. Le montage s'effectue entièrement à la main par encliquetage d'ergots dans des ouvertures pratiquées dans certains des éléments de montage. Il ne nécessite l'intervention d'aucun outil.

L'invention permet, en utilisant au moins deux types différents d'éléments éventuellement identiques, de réaliser de très nombreuses compinaisons pour l'obtention d'une étagere, vitrine, présentoir dont la hauteur, la largeur et la profondeur peuvent être modifiées à volonté.

On connaît par le document GB-A-2 195 001, un système d'assemblage modulaire sensiblement à angle droit d'éléments plans intercalaires pourvus de doigts découpés dans lesdits éléments intercalaires perpendiculairement aux arêtes desdits éléments et de plateaux percés de trous, par emboîtement des doigts dans lesdits trous des plateaux percés vis-à-vis des doigts, les doigts portant à leur extrémité des ergots coplanaires latéraux de même épaisseur, tournés l'un vers l'autre et/ou dos à dos.

Par le document DE-A-2261983, on connaît également un présentoir constitué d'un empilement de modules constitués chacun d'un plateau horizontal et d'un élément de paroi vertical. L'élément de paroi vertical est éventuellement courbe et présente un renfoncement muni d'au moins une paire d'ergots destinés à maintenir en place un intercalaire qui épouse la forme du renfoncement susdit. L'intercalaire présente des évidements en face des ergots et des rebords saillants qui agrippent les faces latérales d'un tenon vertical solidaire du plateau.

Le principal inconvénient des présentoirs susmentionnés est le manque de variabilité, adaptabilité et rigidité. Il est souvent indispensable de monter ou de poser le présentoir sur une surface en escalier. Il faut alors mettre en oeuvre des consoles et d'autres dispositifs propres à assurer un appui stable aux éléments porteurs verticaux.

La présente invention vise à remédier aux inconvénients susdits. Elle a pour objet un système d'assemblage modulaire à angle droit d'éléments plans intercalaires pourvus de doigts découpés dans lesdits éléments intercalaires perpendiculairement aux arêtes desdits éléments et de plateaux percés de trous, par emboîtement des doigts dans lesdits trous des plateaux percés vis-à-vis des doigts, les doigts portant à leur extrémité des ergots coplanaires latéraux de même épaisseur, tournés l'un vers l'autre et/ou dos à dos, les ergots latéraux des doigts faisant saillie aux arêtes des éléments intercalaires, tandis que les ergots sont agencés sur les doigts d'une arête d'un élément, de sorte que, lorsque lesdits doigts sont emboîtés dans les trous d'un plateau, une première face dudit plateau prend appui sur l'arête dudit élément, tandis que les ergots servent à l'accrochage dudit plateau en agrippant la face dudit plateau opposée à la première face,
caractérisé en ce que les doigts des paires d'ergots tournés l'un vers l'autre sont verrouillés de manière à ne pouvoir s'éloigner l'une de l'autre, tandis que les doigts de la paire d'ergots tournés à l'opposé l'un de l'autre sont maintenus écartés l'un de l'autre.

Des particularités du système selon l'invention sont données aux revendications 2 et 3.

Ledit présentoir a l'avantage de mettre un objet en valeur dans un étalage. Le reflet des projecteurs crée dans les éléments verticaux et les plateaux, s'ils sont réalisés en matière transparente ou translucide, des jeux de lumière qui mettent en évidence la sinuosité des découpes.

Suivant un développement de l'invention, les éléments intercalaires présentent une entaille sur le long de deux côtés opposés dont la longueur correspond à la moitié de la hauteur des éléments.

Les plateaux sont de forme quelconque, carrée, rectangulaire ou ronde.

Des particularités et détails de l'invention ressortiront de la description suivante des dessins annexés au présent mémoire, qui représentent schématiquement, à titre informatif non limitatif, plusieurs formes de réalisation d'un dispositif d'assemblage, d'accrochage et de sustentation suivant l'invention.

Dans ces dessins :
- la figure 1 est une vue éclatée en perspective d'une première forme de réalisation d'un présentoir suivant l'invention comprenant un seul module;
- la figure 2 est une vue en perspective d'un présentoir résultant de la surperposition de deux modules;
- la figure 3 est une vue en élévation latérale d'un élément vertical du présentoir montré dans la figure 2;
- la figure 4 est une vue éclatée en perspective d'une seconde forme de réalisation d'un présentoir;
- la figure 5 est une vue éclatée en coupe du présentoir montré dans la figure 4;
- la figure 6 est une vue en coupe verticale, après assemblage du présentoir montré dans la figure 4, mais avant verrouillage des paires d'ergots inférieurs et supérieurs;
- la figure 7 est une vue en coupe, semblable à celle de la figure 6, du présentoir après verrouillage des deux paires d'ergots;
- la figure 8 est une vue en élévation d'un présentoir composé de plusieurs modules identiques à celui montré dans les figures 6 et 7;
- la figure 9 est une vue éclatée en perspective d'une troisième forme de réalisation d'un présentoir composé d'un seul module;
- les figures 10 et 11 sont des vues en perspective d'un présentoir en matériau opaque montré avant et après verrouillage des ergots d'accrochage.

Dans ces différentes figures, les mêmes notations de référence désignent des éléments identiques ou analogues.

Le système d'assemblage modulaire suivant l'invention pour réaliser une étagère d'étalage ou un présentoir 1 se compose d'éléments intercalaires 2 d'accrochage et de plateaux 3.

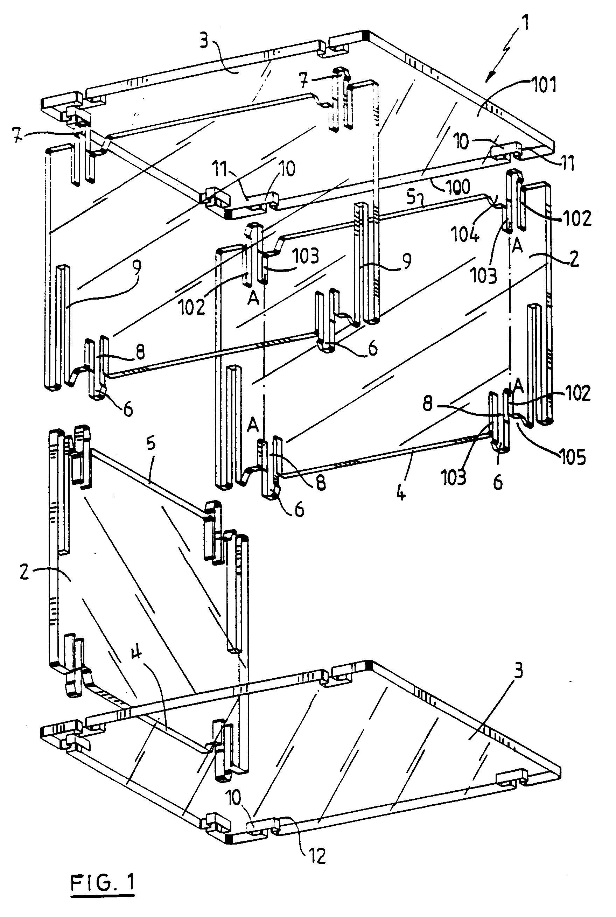

Dans une première forme de réalisation, illustrée dans la figure 1, d'un présentoir comprenant un seul module, les éléments intercalaires 2 sont verticaux et les plateaux 3 sont horizontaux . Tous sont des panneaux de matière synthétique présentant des découpes permettant leur accrochage. Chaque panneau vertical est sensiblement rectangulaire et présente le long des bords inférieur 4 et supérieur 5 une paire d'ergots 6, 7 découpés dans le panneau de manière à dépasser lesdits bords 4 et 5. Au voisinage d'une des pattes 8, on prévoit avantageusement une entaille verticale 9 qui s'étend sur une portion de hauteur du panneau, de préférence sur la moitié de la hauteur. La largeur de l'entaille 9 correspond à l'épaisseur des panneaux verticaux adjacents à assembler.

Chaque panneau horizontal comporte quatre trous rectangulaires 10 disposés au voisinage des quatre coins du panneau. Les trous 10 sont dimensionnés pour recevoir chacun deux ergots, l'un par le haut et l'autre par le bas.

Ces ergots 6, 7 sont :
- soit tournés dans des directions opposées pour s'accrocher chacun au bord transversal 11 le plus éloigné d'un trou 10 ou d'une paire de trous 10,
- soit tournés l'un vers l'autre pour s'accrocher chacun au bord transversal 12 le plus proche de l'autre trou.

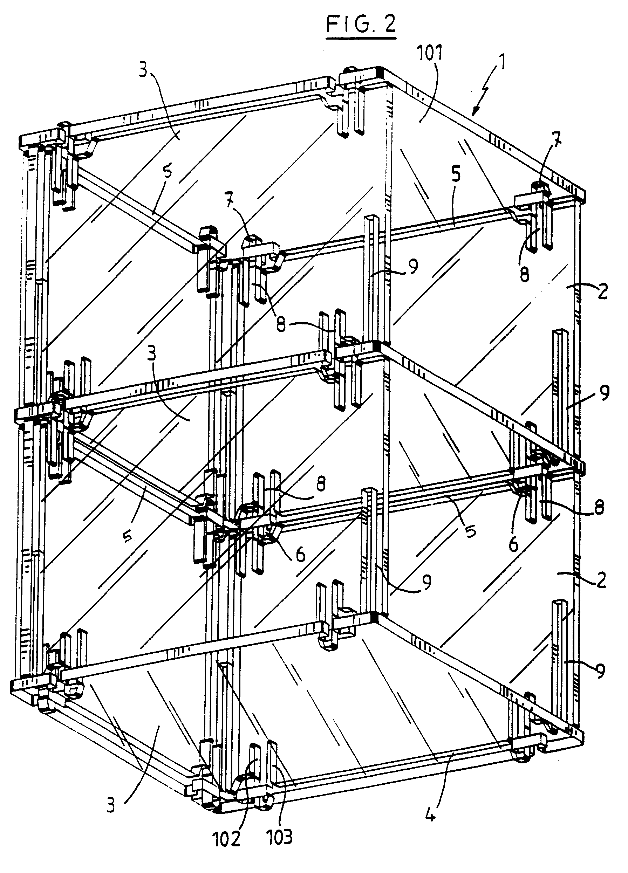

Comme chaque trou peut recevoir deux ergots, il est possible de disposer dans le prolongement d'un premier élément vertical, un second élément vertical que l'on fixe à un des plateaux par accrochage des ergots, comme illustré dans la figure 2.

Ainsi que l'on peut le voir aux figures 1 à 3, le plateau (par exemple le plateau supérieur 3) présente une face 100 prenant appui sur l'arête 5 de l'élément 2 et une face 101 opposée à la face 100 . Les ergots 7 servent à l'accrochage du plateau 3 en agrippant ladite face 101.

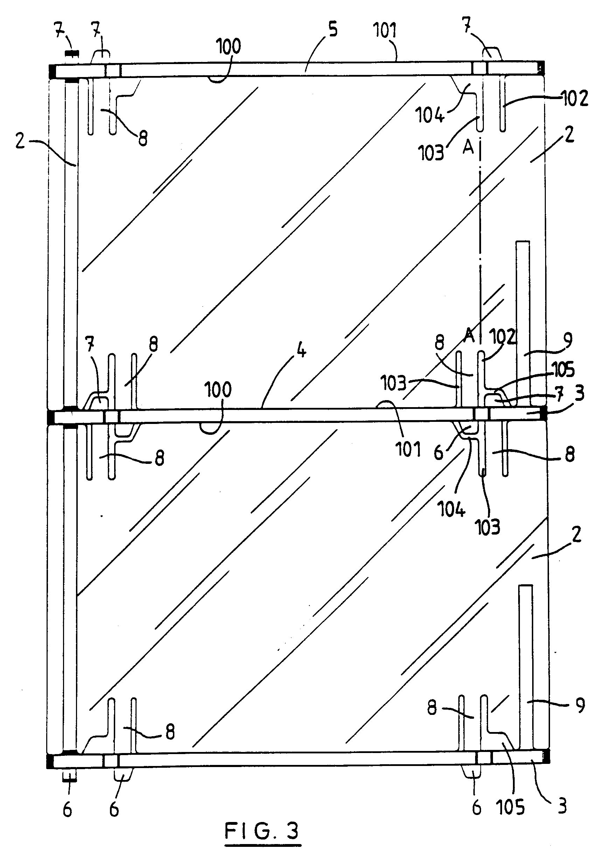

A la figure 3, il ressort clairement que les doigts 8 d'une arête s'étendent entre une première découpe 102 et une deuxième découpe 103 de l'élément intercalaire 2, et que pour chaque doigt de l'arête 5 l'ergot 7 surplombe la découpe 102 en étant introduit dans l'ouverture 105 prolongeant la découpe 102, tandis que pour chaque doigt de l'arête 4, l'ergot 6 surplombe la découpe 103 en étant introduit dans l'ouverture 104 prolongeant la découpe 103.

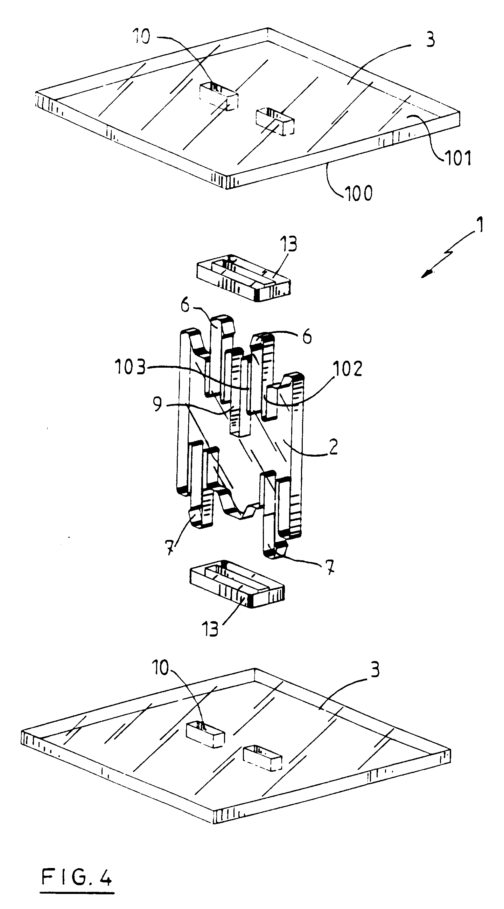

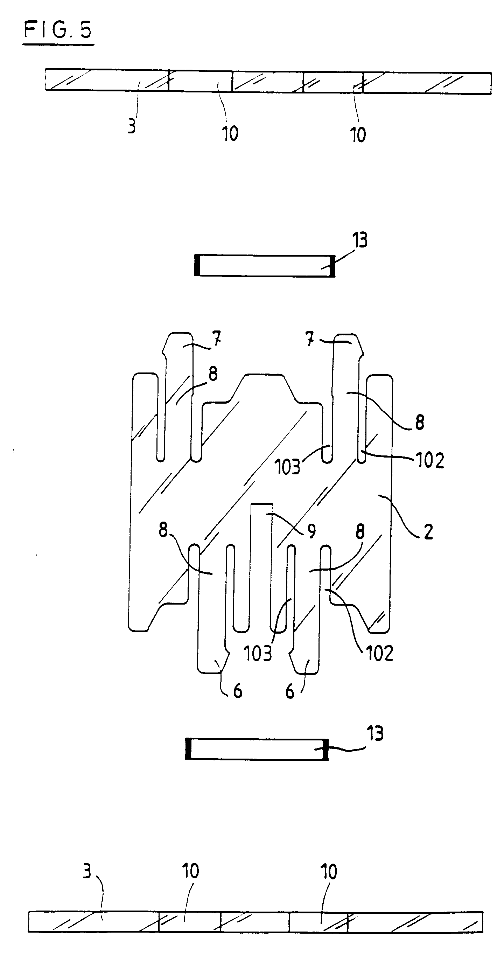

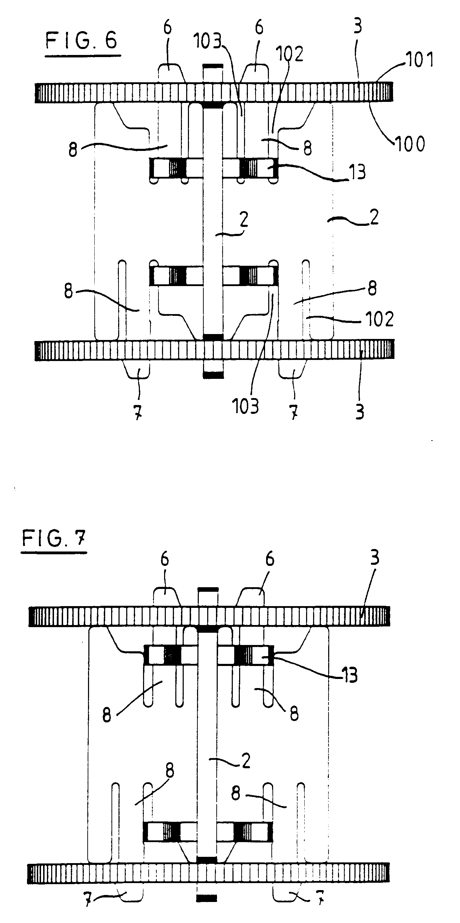

Dans une seconde forme de réalisation, le présentoir est composé d'un seul élément intercalaire 2 inséré entre deux plateaux horizontaux. La largeur de l'élément intercalaire 2 est juste suffisante pour présenter à chaque extrémité une paire d'ergots 6, 7 complémentaire et une entaille 9 longitudinale. Le long des pattes 8 des ergots 6, 7 sont prévus des dispositifs de verrouillage 13, constitués d'un cadre rectangulaire. Les pattes 8 de la paire d'ergots 6 les plus proches tournés l'un vers l'autre, sont assemblés de manière à ne pas pouvoir s'éloigner l'une de l'autre, tandis que les pattes 8 de la paire d'ergots 7 tournés à l'opposé l'un de l'autre sont maintenus écartés l'un de l'autre.(Fig. 4 à 6)

Dans une troisième forme de réalisation, le présentoir 1 comporte une colonne centrale constituée de deux éléments intercalaires 2 verticaux entrecroisés par chevauchement d'une entaille longitudinale 9 dont la largeur correspond à l'épaisseur de chacun des éléments intercalaires 2 et qui s'étend sur la moitié de la hauteur de chacun d'eux, et des plateaux horizontaux 3 comportant chacun quatre trous 10 rectangulaires disposés au sommmet d'une croix. Chaque élément intercalaire 2 comporte à chaque extrémité une paire d'ergots 6, 7 fixée chacune à l'extrémité de deux pattes 8 découpées dans l'élément intercalaire 2 sur une portion de largeur de celui-ci à une distance égale des deux bords transversaux les plus proches et respectivement les plus éloignés d'une paire de trous. La première paire d'ergots 6 est tournée l'un vers l'autre et la seconde 7 dans des directions opposées. Les deux paires 6, 7 sont prévues pour s'accrocher aux bords transversaux des deux trous 10 après avoir été engagés et enfoncés dans chacun d'eux. La première paire d'ergots 6 s'accroche à chaque fois au bord transversal le plus proche de l'autre trou et la seconde paire 7 s'accroche à chaque fois au bord transversal le plus éloigné de l'autre trou 10.

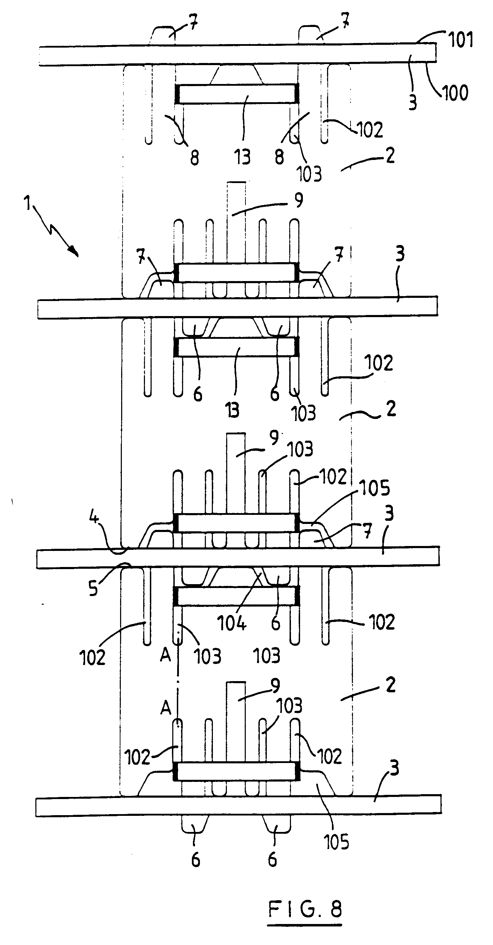

On ajoute un étage au présentoir en superposant à la colonne centrale, deux éléments intercalaires 2 verticaux entrecroisés que l'on fixe au plateau inférieur en enfonçant, dans chacun des quatre trous 10 rectangulaires disposés au sommet d'une croix, une première et une seconde paire d'ergots 6, 7 qui est chevauchée ou qui chevauche la seconde et respectivement la première paire de l'étage inférieur. (Fig.8)

Avantageusement, l'élément intercalaire comporte à une extrémité supérieure deux ergots 7 tournés dans des directions opposées, et à l'autre extrémité deux ergots 6 tournés l'un vers l'autre.

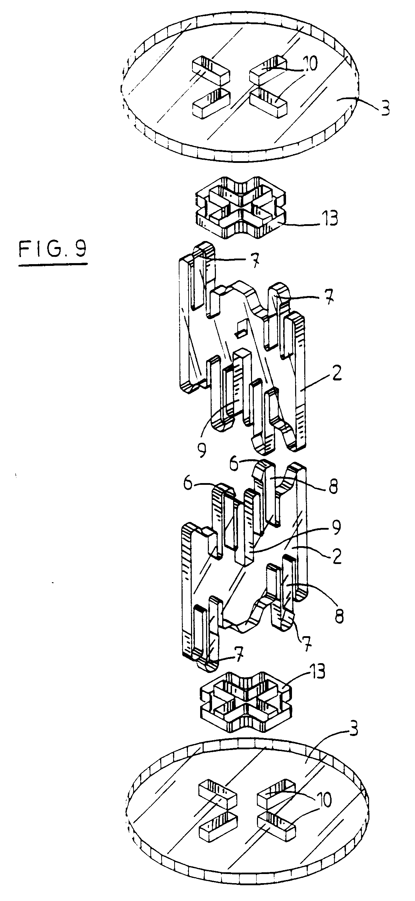

Ainsi, comme illustré dans la figure 9, deux éléments intercalaires peuvent être fixés par la même paire de trous 10 à un plateau intermédiaire pour former une étagère à modules superposés.

Un premier élément intercalaire est accroché au plateau intermédiaire qui prend appui sur le bord supérieur dudit élément intercalaire par deux ergots 6 tournés l'un vers l'autre, tandis qu'un second élément intercalaire, disposé au dessus du premier élément, dans le prolongement de celui-ci, est accroché au plateau intermédiaire sur lequel il prend appui, par deux ergots 7 tournés à l'opposé l'un de l'autre et introduits dans les mêmes trous.

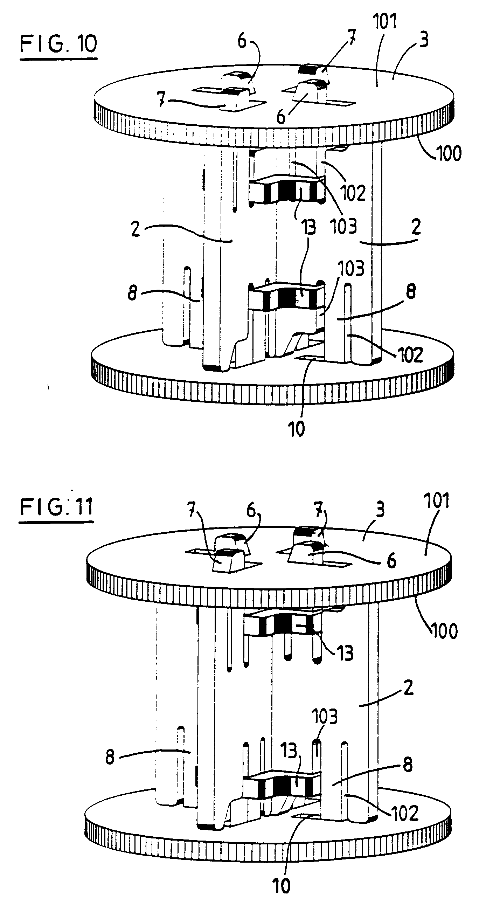

Les pattes des ergots sont verrouillées par un dispositif de blocage 13 constitué d'une entretoise en forme de croix. Les pattes de la paire d'ergots 6 tournés l'un vers l'autre, sont assemblées de manière à ne pas pouvoir s'éloigner l'une de l'autre, tandis que les pattes de la paire d'ergots 7 tournés à l'opposé l'un de l'autre sont maintenues écartées l'une de l'autre. (Fig.10 et 11)

## Revendications

1. Système d'assemblage modulaire à angle droit d'éléments plans intercalaires (2) pourvus de doigts (8) découpés dans lesdits éléments intercalaires (2) perpendiculairement aux arêtes (4,5) desdits éléments et de plateaux (3) percés de trous (10), par emboîtement des doigts (8) dans lesdits trous des plateaux percés vis-à-vis des doigts (8), les doigts (8) portant à leur extrémité des ergots (6,7) coplanaires latéraux de même épaisseur, tournés l'un vers l'autre et/ou dos à dos, les ergots latéraux (6,7) des doigts (8) faisant saillie aux arêtes (4,5) des éléments intercalaires (2), tandis que les ergots (6,7) sont agencés sur les doigts (8) d'une arête (4,5) d'un élément (2), de sorte que, lorsque lesdits doigts sont emboîtés dans les trous (10) d'un plateau (3), une première face (100) dudit plateau (3) prend appui sur l'arête (4,5) dudit élément (2), tandis que les ergots (6,7) servent à l'accrochage dudit plateau en agrippant la face (101) dudit plateau (3) opposée à la première face (100),
caractérisé en ce que les doigts (8) des paires d'ergots (6) tournés l'un vers l'autre sont verrouillés de manière à ne pouvoir s'éloigner l'un de l'autre, tandis que les doigts (8) de la paire d'ergots (7) tournés à l'opposé l'un de l'autre sont maintenus écartés l'un de l'autre.

2. Système suivant la revendication 1, caractérisé en ce que les deux doigts (8) que présentent une arête (4,5) d'un élément intercalaire (2) s'étendent chacun entre une première découpe (102) et une deuxième découpe (103) de l'élément intercalaire (2), lesdites première et deuxième découpes (102,103) de chacun des doigts (8) étant parallèles entre elles et perpendiculaires à ladite arête (4,5), la première découpe (102) d'un doigt (8) étant adjacente d'un bord latéral de l'élément intercalaire (2), tandis que la deuxième découpe (103) d'un doigt (8) est tournée vers une découpe (103) de l'autre doigt (8) de l'arête (4,5), et en ce que pour chaque doigt (8) de l'arête (4,5), l'ergot (6,7) d'un doigt (8) surplombe la première découpe (102) dudit doigt lorsque les ergots (7) desdits doigts (8) sont tournés dos à dos et la deuxième découpe (103) dudit doigt (8) lorsque les ergots (6) desdits doigts (8) sont tournés l'un vers l'autre.

3. Système suivant la revendication 2, caractérisé en ce qu'il est muni d'un dispositif de verrouillage (13) de l'emboîtement de deux doigts (8) d'une arête (4,5) d'un élément intercalaire (2) dans les trous (10) d'un plateau (3), ledit dispositif étant un cadre agencé pour glisser dans les deuxièmes découpes (103) des doigts (8) lorsque les ergots (7) desdits doigts (8) sont tournés dos à dos et dans les premières découpes (102) des doigts (8) lorsque les ergots (6) desdits doigts (8) sont tournés l'un vers l'autre.

## Claims

1. System for modular assembly at right angles of intercalated flat elements (2) provided with fingers (8) cut out of the said intercalated elements (2) perpendicularly to the edges (4, 5) of the said elements and with platforms (3) with holes (10) passing through them, by fitting the fingers (8) into the said holes passing through the platforms opposite the fingers (8), the fingers (8) carrying at their ends lateral coplanar lugs (6, 7) of the same thickness, turned towards each other and/or back to back, the lateral lugs (6, 7) of the fingers (8) projecting at the edges (4, 5) of the intercalated elements (2), while the lugs (6, 7) are arranged on the fingers (8) of an edge (4, 5) of an element (2), so that, when the said fingers are fitted into the holes (10) of a platform (3), a first face (100) of the said platform (3) bears on the edge (4, 5) of the said element (2), while the lugs (6, 7) act to fasten the said platform by gripping the face (101) of the said platform (3) opposed to the first face (100),
characterised by the fact that the fingers (8) of the pairs of lugs (6) turned towards each other are locked so as to be unable to move apart from each other, while the fingers (8) of the pair of lugs (7) turned away from each other are kept spread apart from each other.

2. System as described in claim 1, characterised by the fact that the two fingers (8) presented by an edge (4, 5) of an intercalated element (2) each extend between a first cut (102) and a second cut (103) of the intercalated element (2), the said first and second cuts (102, 103) of each of the fingers (8) being parallel with each other and perpendicular to the said edge (4, 5), the first cut (102) of a finger (8) being adjacent to a lateral edge of the intercalated element (2), while the second cut (103) of a finger (8) is turned towards a cut (103) of the other finger (8) of the edge (4, 5), and by the fact that for each finger (8) of the edge (4, 5), the lug (6, 7) of a finger (8) juts out over the first cut (102) of the said finger when the lugs (7) of the said fingers (8) are turned back to back and over the second cut (103) of the said finger (8) when the lugs (6) of the said fingers (8) are turned towards each other.

3. System as described in claim 2, characterised by the fact that it is provided with a device (13) for locking the fitting of two fingers (8) of an edge (4, 5) of an intercalated element (2) into the holes (10) of a platform (3), the said device being a frame arranged to slide in the second cuts (103) of the fingers (8) when the lugs (7) of the said fingers (8) are turned back to back and in the first cuts (102) of the fingers (8) when the lugs (6) of the said fingers (8) are turned towards each other.

## Patentansprüche

1. Rechtwinkliges modulares Montage-System mit einschieb- bzw. einsetzbaren planen Elementen (2), versehen mit Zapfen (8), die in den einsetzbaren Elementen (2) ausgeschnitten sind rechtwinklig zu Kanten (4,5) der Elemente, und Böden (3), die von Löchern (10) durchbohrt sind zum Einsetzen der Zapfen (8) in die Löcher der Böden, die den Zapfen (8) gegnüberliegend gebohrt sind, wobei die Zapfen (8) an ihren äußeren Enden lateral koplanare Nasen bzw. Vorsprünge (6, 7) derselben Dicke bzw. Stärke tragen, einer zum anderen und/oder Rücken zu Rücken zugewandt bzw. gerichtet, die lateralen Vorsprünge (6, 7) der Zapfen (8) an den Kanten (4, 5) der einsetzbaren Elemente (2) hervorragen, während die Vorsprünge (6, 7) an den Zapfen (8) einer Kante (4, 5) eines Elementes (2) derart angeordnet sind, daß, wenn die Zapfen in die Löcher (10) eines Bodens (3) eingesetzt sind, eine erste Seite (100) des Bodens (3) an der Kante (4, 5) des Elementes (2) zur Anlage kommt, während die Vorsprünge (6, 7) zum Verhaken des Bodens dienen durch Greifen der Fläche (101) des Bodens (3), die der ersten Fläche (100) entgegengesetzt ist,
dadurch gekennzeichnet, daß
die Zapfen (8) der Paare von einander gegenüberliegend bzw. zugewandt gerichteten Vorsprüngen (6) derart verriegelt sind, daß sie sich nicht voneinander entfernen können, während die Zapfen (8) des Paares von Vorsprüngen (7), die einander entgegengesetzt bzw. abgewandt gerichtet sind, auf Abstand gehalten werden.

2. System nach Anspruch 1, dadurch gekennzeichnet, daß die zwei Zapfen (8), die eine Kante (4, 5) eines einsetzbaren Elementes (2) aufweisen, sich jeweils zwischen einem ersten Ausschnitt (102) und einem zweiten Ausschnitt (103) des einsetzbaren Elementes (2) erstrecken,
die ersten und zweiten Ausschnitte (102, 103) jedes Zapfen (8) parallel zueinander und rechtwinklig zu der Kante (4, 5) sind,
der erste Ausschnitt (102) eines Zapfen (8) benachbart zu einer lateralen Kante des einsetzbaren Elementes (2) ist, während der zweite Ausschnitt (103) eines Zapfens (8) einem Ausschnitt (103) des anderen Zapfens (8) der Kante (4, 5) zugewandt ist, und daß
für jeden Zapfen (8) der Kante (4, 5) der Vorsprung (6, 7) eines Zapfens (8) übersteht über den ersten Ausschnitt (102) des Zapfens, wenn die Vorsprünge (7) der Zapfen (8) Rücken an Rücken zueinander gedreht sind, und über den zweiten Ausschnitt (103) des Zapfens (8), wenn die Vorsprünge (6) der Zapfen (8) einander zugewandt sind.

3. System nach Anspruch 2, dadurch gekennzeichnet, daß
eine Einrichtung zum Verriegeln (13) der Einfügung der zwei Zapfen (8) einer Kante (4, 5) eines einsetzbaren Elementes (2) in die Löcher (10) eines Bodens (3) vorgesehen ist,
die Einrichtung ein Rahmen ist, der angeordnet ist zum Gleiten in den zweiten Ausschnitten (103) der Zapfen (8), wenn die Vorsprünge (7) der Zapfen (8) Rücken an Rücken zueinander gerichtet sind, und in den ersten Ausschnitten (102) der Zapfen (8), wenn die Vorsprünge (6) der Zapfen (8) einander zugewandt sind.
